# EUROPÄISCHE PATENTSCHRIFT

(11) **EP 0 909 542 B1**
(45) Veröffentlichungstag und Bekanntmachung des Hinweises auf die Patenterteilung: **28.06.2000**
(21) Anmeldenummer: 97117887.6
(22) Anmeldetag: 15.10.1997
(51) Int. Cl.: A47J 31/40

(54) **Kaffeemaschine**
Coffee machine
Machine à café

(43) Veröffentlichungstag der Anmeldung: 21.04.1999
(73) Patentinhaber: WMF WÜRTTEMBERGISCHE METALLWARENFABRIK AG, 73309 Geislingen/Steige (DE)
(72) Erfinder: Bauer, Ewald, 73312 Geislingen/Steige-Weiler (DE)
(74) Vertreter: Grünecker, Kinkeldey, Stockmair & Schwanhäusser Anwaltssozietät

(56) Entgegenhaltungen:
- EP-A- 0 177 462
- EP-A- 0 295 565
- EP-A- 0 427 666
- EP-A- 0 564 399
- DE-A- 1 404 728
- DE-A- 3 316 157

## Beschreibung

Die Erfindung bezieht sich auf eine Kaffeemaschine zum wahlweisen Brühen einer ersten und einer zweiten Kaffeesorte, insbesondere von Filterkaffee und Espressokaffee.

Kaffeemaschinen, die in der Lage sind, auf Anforderung durch einen Benutzer wahlweise entweder Filterkaffee oder Espressokaffee zu brühen, sind seit Jahren bekannt, beispielsweise aus der DE-PS 33 16 157. Die Brühkammem dieser Kaffeemaschinen sind mit einem Brühsieb ausgestattet, das das eindosierte Kaffeemehl während des Brühvorganges hält und das Brühgetränk durchlaufen läßt, so daß es aus einem Maschinenauslauf in ein Gefäß, beispielsweise eine Tasse oder eine Kanne, ausgegeben werden kann. Die Betriebsparameter zum Brühen von Espressokaffee und Filterkaffee sind jedoch unterschiedlich. So muß beispielsweise beim Brühen von Espressokaffee das Kaffeemehl mehr oder weniger gepreßt werden und die Extraktion unter Druck durchgeführt werden, was bei Filterkaffee nicht notwendig ist. Deshalb wären eigentlich bei Kaffeemaschinen, die zwei unterschiedliche Kaffeegetränke herstellen können, zwei verschiedene Brüheinrichtungen notwendig. Dies ist jedoch sehr teuer und aufwendig. In der DE-PS 33 16 157 wird deshalb nur eine Brüheinrichtung verwendet, die druckdicht ausgebildet ist und das Kaffeemehl pressen kann, aber auch drucklos und ohne zu pressen arbeiten kann. Es wurde jedoch festgestellt, daß auch die Gestaltung des Filtermediums zu einer Optimierung der Qualität des Brühgetränkes beiträgt. Die bekannten Brüheinrichtungen, die nur ein Filtermedium aufweisen, sind demnach notgedrungen nur Kompromißlösungen.

Der Erfindung liegt die Aufgabe zugrunde, eine Kaffeemaschine zum wahlweisen Brühen von Normalkaffee und Espressokaffee bereitzustellen, mit der die Qualität der Brühgetränke optimiert werden kann.

Die Aufgabe wird durch die in Anspruch 1 angegebenen Merkmale gelöst.

Durch die Verwendung zweier Filtermedien, die jeweils ganz speziell auf die Erfordernisse des zuzubereitenden Brühgetränkes abgestimmt sind, kann die Brühkammer optimal und auf einfache Weise auf die Erfordernisse des jeweils vorgewählten Brühgetränkes eingestellt werden, ohne daß beispielsweise eine zweite Brüheinrichtung bzw. eine zweite Brühkammer erforderlich wären.

Die Begriffe "Espresso" und "Normalkaffee" sind nur zur Vereinfachung der Beschreibung gewählt; der Begriff "Espresso" soll auch jedes ähnlich zubereitete Kaffeegetränk, beispielsweise "Kaffee Creme" oder "Schümli" umfassen, während der Begriff "Normalkaffee" das in Deutschland unter dem Begriff "Filterkaffee" bekannte Getränk und jedes andere Kaffeebrühgetränk umfassen soll, das ein gegenüber der Espressozubereitung abweichend ausgestaltetes Filtermedium erfordert.

Anspruch 2 beschreibt eine besonders bevorzugte, konstruktiv besonders einfache Lösung, um sicherzustellen, daß das Brühgetränk die Brühkammer genau durch dasjenige Filtermedium verläßt, das dem vorgewählten Brühgetränk entspricht. Die meisten handelsüblichen Brüheinrichtungen weisen einen dem Filtermedium gegenüberliegenden Wasserverteiler auf, der sicherstellen soll, daß das Brühwasser gleichmäßig über die gesamte Oberfläche des sich in der Brühkammer befindenden Kaffeemehls verteilt wird. Gemäß der Lösung nach Anspruch 2 wird dieser Wasserverteiler einfach durch das zweite Filtermedium ersetzt, wobei die Verteileinrichtung dafür sorgt, daß die Durchflußrichtung durch die Brühkammer umgedreht werden kann; d.h. die Brühkammer in zwei Durchflußrichtungen durchströmt werden kann.

Die Ausgestaltung nach Anspruch 3 erleichtert das Umkehren der Durchflußrichtung.

Die Konstruktion wird noch weiter vereinfacht, wenn gemäß Anspruch 4 jedem Filtermedium nur eine einzige Leitung zugeordnet ist, die wahlweise entweder als Brühwassereinlaß oder als Getränkeauslaß wirkt.

Anspruch 5 beschreibt eine besonders robuste und konstruktiv einfache Steuerung für die Verteileinrichtung.

Das Druckentlastungsventil nach Anspruch 6 verhindert das Spritzen beim Ausgeben von Espresso.

Die Ansprüche 7 bis 9 beschreiben ausgewählte Merkmale an sich bekannter Brüheinrichtungen, die sich zur Verwendung mit der vorliegenden Erfindung als besonders vorteilhaft erwiesen haben.

Anspruch 10 beschreibt eine vorteilhafte Ausgestaltung eines verwendeten Kolbenbrühers, um die Umkehrung der Durchflußrichtung in der Brühkammer zu erleichtem.

Die Ansprüche 11 bis 15 betreffen vorteilhafte Ausgestaltungen für das erste bzw. das zweite Filtermedium der erfindungsgemäßen Kaffeemaschine, wobei die kleinere offene Fläche für das unter Druck zuzubereitende Brühgetränk den Aufbau des Drukkes erleichtert, während die größere offene Fläche für den Filterkaffee die Durchlaufzeit reduziert. Durch die etwas größeren Innenkreisdurchmesser für den Espressokaffee oder dgl. soll der Durchtritt von Sedimentanteilen erleichtert werden, die den Aufbau einer stabilen "Crema" erleichtert und zur Optimierung von Geschmack und Aussehen des Brühgetränks beitragen. Die vergleichsweise kleinen Durchmesser im Filtermedium für Filterkaffee od. dgl. sollen Kaffeepartikel vollständig zurückhalten, die im Filterkaffee nicht erwünscht sind.

Ein Ausführungsbeispiel der Erfindung wird nachfolgend anhand der Zeichnungen näher erläutert. Es zeigen:
- Fig. 1: eine schematische Darstellung einer Kaffeemaschine mit den für die Erfindung wichtigsten Bauteilen,
- Fig. 2: eine Brüheinrichtung für die Kaffeemaschine nach Fig. 1, und
- Fig. 3 A,B+C: drei verschiedene Betriebsstellungen der Brüheinrichtung nach Fig. 2.

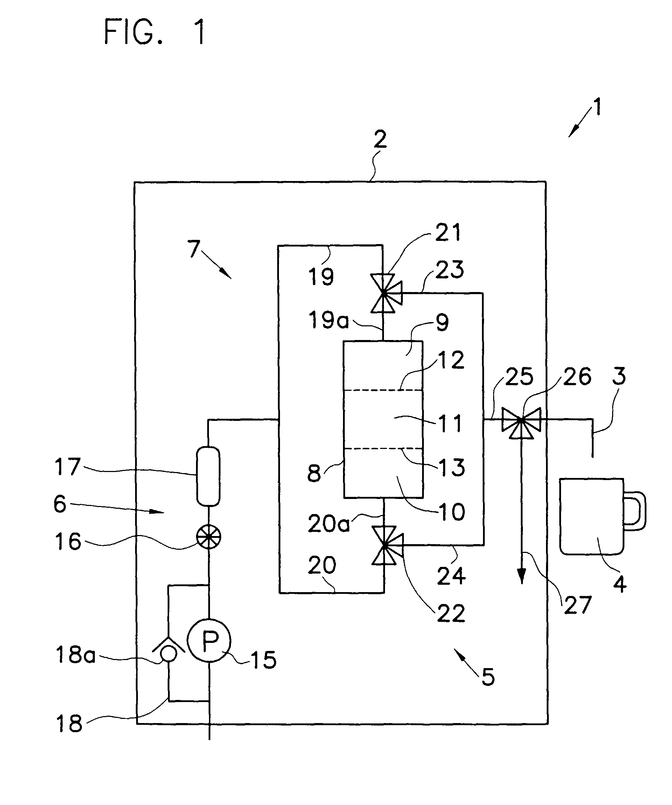

Fig. 1 zeigt in schematischer Darstellung eine Kaffeemaschine 1 mit einem Gehäuse 2 und einer aus dem Gehäuse ausmündenden Zapföffnung 3, unter die ein Gefäß 4, dargestellt ist eine Tasse, zum Befüllen gestellt werden kann. Die Kaffeemaschine 1 ist bevorzugt eine der üblichen, automatisch arbeitenden Kaffeemaschinen, bei denen an der Außenseite des Gehäuses nicht dargestellte Bedienungsknöpfe und/oder - tasten vorgesehen sind, mit denen der Benutzer die Ausgabe einer vorbestimmbaren Art eines Brühgetränkes in einer gegebenenfalls ebenfalls vorbestimmbaren Menge nach seiner Wahl auswählen kann. Die Kaffeemaschine 1 ist auf jeden Fall in der Lage, eine erste Kaffeesorte, insbesondere Espressokaffee oder eine vergleichbare Kaffeeart, wie beispielsweise Kaffee Creme oder Schümlikaffee, und dazu eine zweite Kaffeesorte, insbesondere Filterkaffee zuzubereiten.

Im Inneren des Gehäuses 2 sind die zur Kaffeezubereitung notwendigen Bauteile untergebracht, von denen aus Gründen der Übersichtlichkeit nur eine Brüheinrichtung 5, eine Brühwasserbereitung und -zuführung 6 sowie eine Verteileinrichtung 7 für das Brühwasser dargestellt sind. Alle anderen für den Betrieb von automatischen Kaffeemaschinen dieser Art notwendigen oder wünschenswerten Bauteile, wie beispielsweise ein Mahlwerk, eine Kaffeemehldosierung, eine Milchaufschäumung, eine Heißwasserausgabe, ein Vorratsbehälter od. dgl., sind aus Gründen der Übersichtlichkeit weggelassen worden.

Die Brüheinrichtung 5 ist in der Art eines Kolbenbrühers ausgebildet, wie sie häufig für automatisch arbeitende Kaffeemaschinen verwendet werden, die sowohl Espresso als auch Filterkaffee herstellen können. Ein derartiger Kolbenbrüher ist beispielsweise aus dem DE-GM 91 15 998 bekannt, wobei auf die Einzelheiten seiner Konstruktion auf diese Druckschrift verwiesen werden soll. Nachfolgend werden nur die für die vorliegende Erfindung notwendigen Einzelheiten erläutert.

Die Brüheinrichtung 5 enthält einen Brühzylinder 8, der stehend, d.h. mit vertikaler Achse, angeordnet ist. Die oberen und unteren Stirnseiten des Brühzylinders 8 sind mit jeweils einem Kolben 9 und 10 verschließbar. Die Kolben 9 und 10 sind parallel zueinander angeordnet und begrenzen eine dazwischenliegende Brühkammer 11.

Der obere, stationäre Kolben 9 weist an seiner der Brühkammer zugewandten Seite ein erstes Filtermedium in Form eines als Lochblech ausgebildeten Brühsiebes 12 auf. Das erste Brühsieb 12 ist als Espressosieb ausgebildet und weist eine relativ kleine offene Siebfläche von etwa 1 bis etwa 10 %, bevorzugt etwa 2 bis etwa 4 % auf, damit der Druckaufbau erleichtert wird. Die Löcher im ersten Brühsieb 12 haben hingegen einen vergleichsweise großen Innenkreisdurchmesser von etwa 100 bis etwa 400 µm, bevorzugt etwa 150 bis etwa 200 µm, damit kleine Sedimentteilchen hindurchtreten können, die den Aufbau einer stabilen Crema, wie er bei Espresso gewünscht ist, fördern und den Geschmack sowie das Aussehen des Espressokaffees abrunden.

Der bewegliche, untere Kolben 10 weist an seiner der Brühkammer 11 zugewandten Seite ein zweites Filtermedium in Form eines als Lochblech ausgebildeten Brühsiebes 13 auf, das an die Zubereitung von Filterkaffee angepaßt ist. Das zweite Brühsieb 13 hat eine etwas größere freie Siebfläche als das erste Brühsieb 12, die mehr als 5 %, bevorzugt mehr als 20 %, beträgt. Dadurch wird verhindert, daß sich ein bei der Bereitung von Filterkaffee unerwünschter, hoher Druck aufbaut und es wird die Durchflußgeschwindigkeit des im wesentlichen drucklos bzw. unter Wasserleitungsdruck durchlaufenden Wassers erhöht. Die Löcher im zweiten Brühsieb 13 haben einen Innenkreisdurchmesser von weniger als 120 µm, bevorzugt etwa 50 bis etwa 80 pm, um den Durchtritt von Kaffeesatzpartikeln, die im Filterkaffee unerwünscht sind, zu verhindern.

Die Brühwasserbereitung und -zuführung 6 enthält eine Zufuhrleitung 14, die außerhalb des Gehäuses 2 an eine Wasserleitung angeschlossen wird. In die Zufuhrleitung 14 ist eine Pumpe 15 eingeschaltet, die nach Einleiten eines Brühvorganges durch einen Benutzer das Wasser über einen Durchflußmengenzähler 16 und einen Durchlauferhitzer 17 in die Verteileinrichtung 7 pumpt. Als Überdrucksicherung für die Pumpe 15 ist eine mit einem Rückschlagventil 18a versehene Bypaßleitung 18 vorgesehen.

Die Verteileinrichtung 7 für das aus dem Durchlauferhitzer 17 austretende, heiße Brühwasser enthält eine erste Brühwasserleitung 19, die durch den oberen Kolben 9, eine direkt oberhalb des Brühsiebes 12 liegende Verteil- bzw. Sammelkammer 12a und das erste Brühsieb 12 in die Brühkammer 11 einmündet. Die Verteileinrichtung 7 enthält weiterhin eine zweite Brühwasserleitung 20, die durch den unteren Kolben 10, eine direkt unterhalb des Brühsiebes 13 liegende Verteil- bzw. Sammelkammer 13a und das zweite Brühsieb 13 in die Brühkammer 11 einmündet. In jede der beiden Brühwasserleitungen 19, 20 ist jeweils ein Dreiwegeventil 21 bzw. 22 eingeschaltet. Jenseits des Dreiwegeventils 21 bzw. 22 setzt sich jede Brühwasserleitung 19 bzw. 20 mit einem Leitungsstück 19a und 20a fort, wobei die Leitungsstücke 19a bzw. 20a die einzigen durch die entsprechenden Kolben 9, 10 und das erste bzw. zweite Brühsieb 12, 13 in die Brühkammer 11 einmündende Leitungen sind und demnach sowohl als Brühwassereinlaß als auch als Getränkeauslaß dienen.

Der dritte Zweig jedes Dreiwegeventils 21, 22 ist jeweils mit einer weiterführenden Getränkeauslaßleitung 23 und 24 verbunden, die in einer gemeinsamen Auslaßleitung 25 zusammenlaufen und über ein Dreiwegeventil 26 in die Zapföffnung 3 außerhalb des Gehäuses 2 mündet. Der dritte Zweig des Dreiwegeventils 26 ist mit einer Spülleitung 27 verbunden, die Reinigungsflüssigkeit nach der Maschinenreinigung wegführt und außerdem als Druckentlastung zum Ableiten eines eventuell nach der Espressobrühung auftretenden Druckstoßes dient, der anderenfalls zum Verspritzen des Getränkes aus der Zapföffnung 3 führen könnte.

Nachfolgend wird die Wirkungsweise der erfindungsgemäßen Kaffeemaschine näher erläutert:

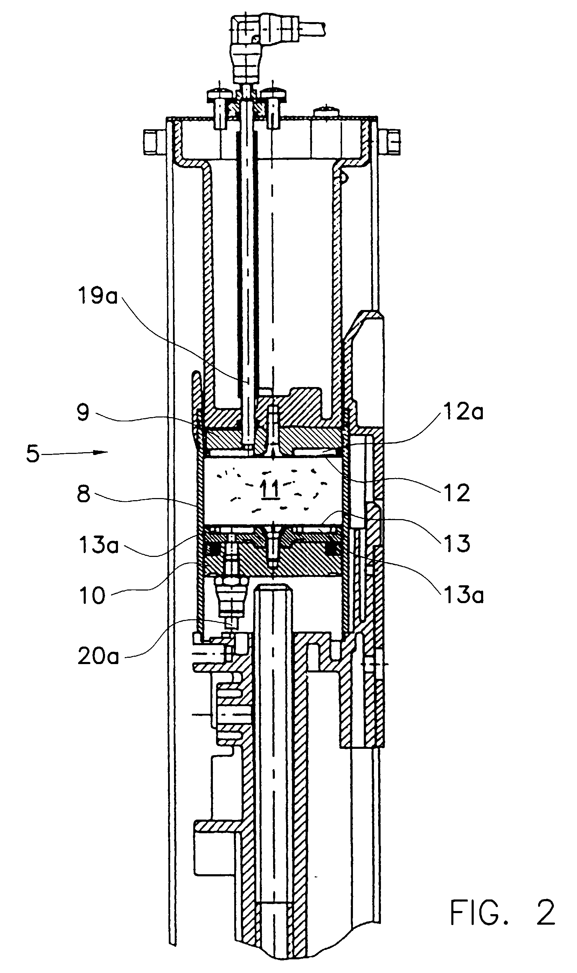

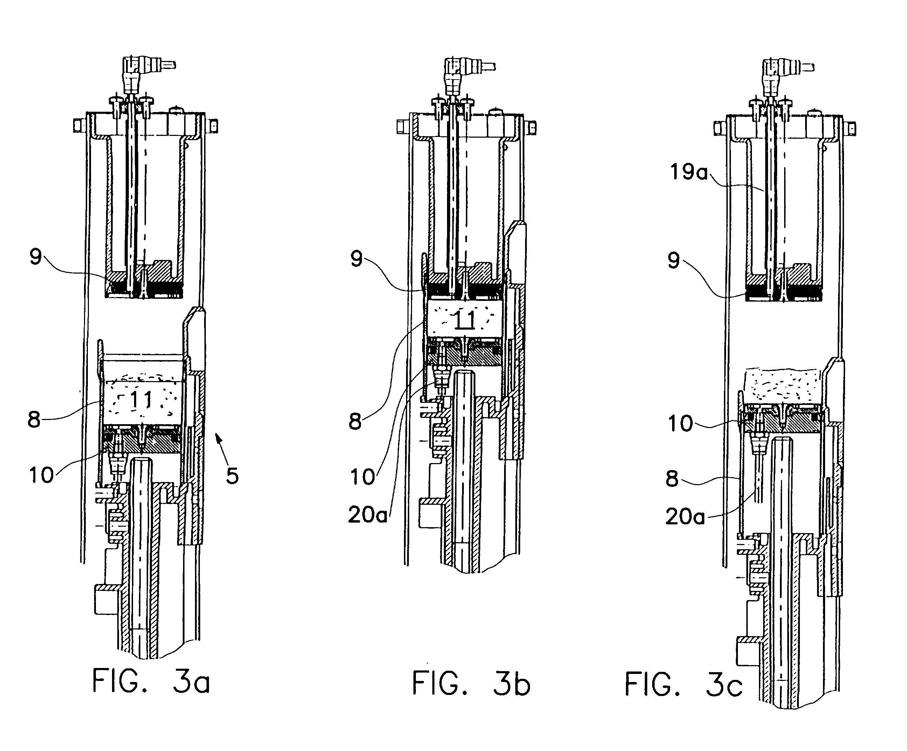

Wird durch einen Benutzer ein Espressokaffee vorgewählt, so wird, wie Fig. 3A zeigt, die Brühkammer 11 geöffnet, indem der untere, bewegliche Kolben 10 unter Mitnahme des Brühzylinders 8 nach unten, vom oberen Kolben 9 weg, verfahren wird. Die Relativstellung des unteren Kolbens 10 und des Brühzylinders 8 bleibt erhalten, so daß nunmehr in die nach oben offenliegende Brühkammer 11 Kaffeemehl der gewünschten Art und der erforderlichen Menge eindosiert werden kann. Dann wird der untere Kolben 10 unter Mitnahme des Brühzylinders 8 wieder nach oben in die in Fig. 2 bzw. 3B gezeigte Stellung verfahren, bis der Brühzylinder 8 sich über den oberen Kolben 9 geschoben hat, so daß die Brühkammer 11 allseitig umschlossen ist. Durch eine weitere Bewegung des unteren Kolbens 10 in Richtung auf den oberen Kolben 9, gegebenenfalls relativ zum Brühzylinder 8, wird das Kaffeemehl in der Brühkammer 11 bis zur gewünschten Kompaktierung gepreßt. Das Dreiwegeventil 22 wird so geschaltet, daß es die Leitungen 20 und 20a verbindet und die Leitung 24 absperrt, die Leitung 20a wirkt somit als Brühwassereinlaß. Das Dreiwegeventil 21 wird so geschaltet, daß es die Leitungen 19a und 23 verbindet, die Leitung 19a wirkt somit als Getränkeauslaß. Dann wird die Pumpe 15 angeschaltet und pumpt Wasser unter hohem Druck über den Durchflußzähler 16 und den Durchlauferhitzer 17 in die Verteileinrichtung 7, d.h. über die Leitung 20 und die Leitung 20a durch den Kolben 10 in den Verteil- und Sammelraum 13a und von dort über das zweite Brühsieb 13, das somit als Verteilsieb wirkt, in die Brühkammer 11 hinein. Durch den von der Pumpe gelieferten Druck wird das Brühgetränk nach oben durch das erste Brühsieb 12, d.h. das Espressosieb, hindurch in den Verteil- bzw. Sammelraum 12a und von dort über die Leitung 19a und die Leitungen 23 und 25 aus der Zapföffnung 3 gedrückt, wo er in die Tasse 4 ausläuft. Vorher wurde zur Druckentlastung kurzzeitig auch die Leitung 20a mit der Leitung 24 über das Ventil 22 und die Leitungen 25 und 27 über das Ventil 26 verbunden, um ein Verspritzen des Espresso in die Tasse 4 zu verhindern.

Wurde Filterkaffee vorgewählt, so bewegt sich der untere Kolben 10 mit dem Brühzylinder 8 nach dem Einfüllen des Filterkaffeemehls in die Brühkammer 11 nur so weit in Richtung des oberen Kolbens 9, daß dieser die obere Öffnung verschließt, sich jedoch zwischen dem Kaffeemehl in der Brühkammer 11 und dem oberen Kolben 9 ein freier Raum befindet. Das obere Dreiwegeventil 21 wird so geschaltet, daß es die Leitungen 19 und 19a verbindet, während das untere Dreiwegeventil 22 die Leitungen 20a und 24 verbindet. Dann wird Wasser entweder durch die Pumpe 15 unter geringerem Druck, oder durch den Leitungswasserdruck, entweder durch die abgeschaltete Pumpe 15 hindurch oder über eine weitere Zufuhrleitung und ein Zufuhrventil (beides nicht dargestellt) über den Durchlaufzähler 16 und den Durchlauferhitzer 17 in die Verteileinrichtung 7 und von dort über die Leitungen 19 und 19a in den Verteil- bzw. Sammelraum 12a und anschließend durch das erste Brühsieb 12, das hier als Verteilsieb wirkt, gefördert, bis die durch den Durchflußmesser 16 vorbestimmte Menge an heißem Wasser in die Brühkammer 11 geflossen ist. Dann wird die Pumpe 15 abgeschaltet bzw. das Zulaufventil geschlossen. Das Heißwasser dringt unter Wirkung des Leitungswasserdrucks und unter Schwerkrafteinfluß durch das Kaffeemehl und tritt als Brühgetränk durch das zweite Brühsieb 13 für Filterkaffee hindurch, sammelt sich im Raum 13a und fließt über die Leitungen 20a, 24 und 25 zur Zapföffnung 3 und von dort in die Tasse 4.

Nach jedem Brühvorgang, sowohl nach einer Espressobrühung als auch nach einer Filterkaffeebrühung, wird der untere Kolben 10 zusammen mit dem Brühzylinder 8 sowie der Brühzylinder 8 relativ zum unteren Kolben 10 so weit zurückgezogen, bis in der in Fig. 3C gezeigten Stellung der Kaffeesatzkuchen nach oben freiliegt und abgestreift werden kann, so daß die Maschine für die nächste Brühung bereit ist.

In Abwandlung des beschriebenen und gezeichneten Ausführungsbeispiels kann die Verteileinrichtung auch einen Schieber oder ein anderes Verschlußorgan enthalten, das den Abfluß durch eines der Filtermedien sperrt, wenn das andere Filtermedium zum Brühen des gewünschten Getränkes verwendet werden soll. In diesem Fall müßte dann eine gesonderte, für beide Filtermedien gemeinsame Brühwasserleitung vorgesehen sein, die den üblichen Wasserverteiler enthalten kann. Diese Konstruktion wäre somit etwas aufwendiger. Außer den beschriebenen, als Lochbleche ausgebildeten Brühsieben kann jedes andere Filtermedium, beispielsweise Filtergewebe oder Filtervlies aus Metall, Kunststoff oder Papier eingesetzt werden. Die geometrische Gestalt der Öffnungen im Filtermedium können variieren; sie können beispielsweise viereckig, birnenförmig oder unregelmäßig sein. Für diese geometrischen Formen bezieht sich die Angabe des Innenkreisdurchmessers auf den Durchmesser des größten Kreises, der von der Umrißform des jeweiligen Loches noch umschlossen wird. Die Ausgestaltung der Filtermedien hinsichtlich ihrer freien Siebfläche bzw. der Innenkreisdurchmesser ihrer Löcher kann optimal auf den Konsumentengeschmack abgestellt werden, der z.B. national verschieden sein kann. Außer Kolbenbrühem können auch Brüher anderer Konstruktion, die nicht unbedingt nur für einen automatischen Betrieb geeignet sein müssen, mit den beiden verschiedenen Filtermedien ausgerüstet werden. Anstelle der Dreiwegeventile können mehrere Zweiwegeventile vorgesehen sein, was die Konstruktion jedoch aufwendiger macht. Ebenfalls möglich, aber aufwendiger, ist es, jeweils getrennte Brühwasserzuführungen und Brühgetränkauslässe einzusetzen. Schließlich müssen die Getränkeauslässe nicht in eine gemeinsame Zapföffnung außerhalb des Gehäuses münden, sondern die vom Dreiwegeventil abzweigenden, entsprechenden Getränkeauslässe können getrennt voneinander aus dem Gehäuse herausgeführt werden.

## Patentansprüche

1. Kaffeemaschine (1), mit einer Brühkammer (11) zum wahlweisen Brühen einer ersten Kaffeesorte, insbesondere Espressokaffee, und einer zweiten Kaffeesorte, insbesondere Normalkaffee, **dadurch gekennzeichnet**, dass die Brühkammer (11) mit einem ersten Filtermedium (2) für die erste Kaffeesorte, insbesondere Espressokaffee, und einem zweiten Filtermedium (13) für die zweite Kaffeesorte, insbesondere Normalkaffee, versehen ist, und dass eine Verteileinrichtung (7) zum Ableiten des Brühgetränks aus der Brühkammer (11) wahlweise über das erste Filtermedium (12), wenn die erste Kaffeesorte gewählt ist, oder über das zweite Filtermedium (13), wenn die zweite Kaffeesorte gewählt ist, vorgesehen ist.

2. Kaffeemaschine nach Anspruch 1, **dadurch gekennzeichnet,** daß die Verteileinrichtung (7) einen über das erste Filtermedium (12) in die Brühkammer (11) mündenden, ersten Brühwassereinlaß (19a) und einen über das zweite Filtermedium (13) in die Brühkammer (11) mündenden, zweiten Brühwassereinlaß (20a) aufweist, wobei beim Brühen der ersten Kaffeesorte über das erste Filtermedium (12) das Brühwasser durch das als Verteilsieb wirkende, zweite Filtermedium (13) in die Brühkammer (11) eingeleitet wird, und beim Brühen der zweiten Kaffeesorte über das zweite Filtermedium (13) das Brühwasser durch das als Verteilsieb wirkende, erste Filtermedium (12) eingeleitet wird.

3. Kaffeemaschine nach Anspruch 1 oder 2, **dadurch gekennzeichnet,** daß die Verteileinrichtung (7) einen dem ersten Filtermedium (12) zugeordneten, aus der Brühkammer (11) ausmündenden, ersten Getränkeauslaß (19a) und einen dem zweiten Filtermedium (13) zugeordneten, aus der Brühkammer (11) ausmündenden zweiten Getränkeauslaß (20a) aufweist.

4. Kaffeemaschine nach Anspruch 3, **dadurch gekennzeichnet,** daß der Brühwassereinlaß und der Getränkeauslaß, die dem gleichen Filtermedium (12 bzw. 13) zugeordnet sind, durch eine gemeinsame Leitung (19a bzw. 20a) gebildet sind.

5. Kaffeemaschine nach Anspruch 4, **dadurch gekennzeichnet**, daß die gemeinsame Leitung (19a bzw. 20a) über ein Dreiwegeventil (21 bzw. 22) mit der Brühwasserversorgung (6) oder einer Zapföffnung (3) verbindbar sind.

6. Kaffeemaschine nach einem der Ansprüche 1 bis 5, **dadurch gekennzeichnet,** daß zwischen der Brühkammer (11) und einer Zapföffnung (3) ein Druckentlastungsventil (26) angeordnet ist.

7. Kaffeemaschine nach einem der Ansprüche 1 bis 6, **dadurch gekennzeichnet,** daß das Volumen der Brühkammer (11) je nach Art des Getränks und/oder der zu brühenden Getränkemenge einstellbar ist.

8. Kaffeemaschine nach einem der Ansprüche 1 bis 7, **dadurch gekennzeichnet,** daß sich die beiden Filtermedien (12, 13) im wesentlichen parallel gegenüberliegen.

9. Kaffeemaschine nach einem der Ansprüche 1 bis 8, **dadurch gekennzeichnet,** daß die Brühkammer (11) in einem Brühzylinder (8) eines Kolbenbrühers (5) vorgesehen ist, wobei jedes dieser Filtermedien (12, 13) jeweils an der Stirnseite eines Kolbens (9, 10) angeordnet ist.

10. Kaffeemaschine nach Anspruch 9, **dadurch gekennzeichnet,** daß bei einem vertikal angeordneten Kolbenbrüher (5) das erste Filtermedium (12) für die erste Kaffeesorte am oberen Kolben (9) angeordnet ist.

11. Kaffeemaschine nach einem der Ansprüche 1 bis 10, **dadurch gekennzeichnet,** daß das erste Filtermedium (12) für die erste Kaffeesorte eine kleinere offene Siebfläche aufweist als das zweite Filtermedium (13) für die zweite Kaffeesorte.

12. Kaffeemaschine nach einem der Ansprüche 1 bis 11, **dadurch gekennzeichnet,** daß das erste Filtermedium (12) etwa 1 bis etwa 10 %, bevorzugt etwa 2 bis etwa 4 %, offene Fläche aufweist.

13. Kaffeemaschine nach einem der Ansprüche 1 bis 12, **dadurch gekennzeichnet,** daß das zweite Filtermedium (13) mehr als 5 % offene Fläche, bevorzugt mehr als 20 %, aufweist.

14. Kaffeemaschine nach einem der Ansprüche 1 bis 13, **dadurch gekennzeichnet,** daß das erste Filtermedium (12) Löcher mit einem Innenkreisdurchmesser von etwa 100 bis etwa 400 µm, bevorzugt etwa 150 bis etwa 200 µm, aufweist.

15. Kaffeemaschine nach einem der Ansprüche 1 bis 14, **dadurch gekennzeichnet,** daß das zweite Filtermedium (13) Löcher mit einem Innenkreisdurchmesser von weniger als 120 µm, bevorzugt etwa 50 bis etwa 80 µm, aufweist.

## Claims

1. Coffee machine (1), comprising a brewing chamber (11) for brewing a first type of coffee, in particular espresso coffee, and a second type of coffee, in particular normal coffee, as required, characterised in that the brewing chamber (11) is provided with a first filter medium (2) for the first type of coffee, in particular espresso coffee, and a second filter medium (13) for the second type of coffee, in particular normal coffee, and that a dispenser (7) is provided for discharging the brewed beverage out of the brewing chamber (11) either via the first filter medium (12) when the first type of coffee is selected or via the second filter medium (13) when the second type of coffee is selected, as required.

2. Coffee machine according to claim 1, characterised in that the dispenser (7) has a first brewing-water inlet (19a) leading into the brewing chamber (11) via the first filter medium (12) and a second brewing-water inlet (20a) leading into the brewing chamber (11) via the second filter medium (13), the brewing water being guided through the second filter medium (13) acting as a dispensing strainer into the brewing chamber (11) when brewing the first type of coffee via the first filter medium (12) and the brewing water being guided through the first filter medium (12) acting as a dispensing strainer when brewing the second type of coffee via the second filter medium (13).

3. Coffee machine according to claim 1 or claim 2, characterised in that the dispenser (7) has a first beverage outlet (19a) leading out of the brewing chamber (11) and associated with the first filter medium (12) and a second beverage outlet (20a) leading out of the brewing chamber (11) and associated with the second filter medium (13).

4. Coffee machine according to claim 3, characterised in that the brewing-water inlet and the beverage outlet associated with the same filter medium (12 or 13) are formed by one common line (19a or 20a).

5. Coffee machine according to claim 4, characterised in that the common line (19a or 20a) can be connected via a three-way valve (21 or 22) to the brewing-water supply (6) or a tap hole (3).

6. Coffee machine according to one of claims 1 to 5, characterised in that a pressure-relief valve (26) is arranged between the brewing opening (11) and a tap hole (3).

7. Coffee machine according to one of claims 1 to 6, characterised in that the volume of the brewing chamber (11) can be adjusted depending on the type of beverage and/or the quantity of beverage to be brewed.

8. Coffee machine according to one of claims 1 to 7, characterised in that the two filter media (12, 13) are situated opposite one another substantially in parallel.

9. Coffee machine according to one of claims 1 to 8, characterised in that the brewing chamber (11) is provided in a brewing cylinder (8) of a plunger-type brewing device (5), each of these filter media (12, 13) being arranged on the end face of a respective plunger (9, 10).

10. Coffee machine according to claim 9, characterised in that, in the case of a vertically arranged plunger-type brewing device (5), the first filter medium (12) for the first type of coffee is arranged on the upper plunger (9).

11. Coffee machine according to one of claims 1 to 10, characterised in that the first filter medium (12) for the first type of coffee has a smaller open strainer area than the second filter medium (13) for the second type of coffee.

12. Coffee machine according to one of claims 1 to 11, characterised in that the first filter medium (12) has an approximately 1 to approximately 10 %, preferably approximately 2 to approximately 4 % open area

13. Coffee machine according to one of claims 1 to 12, characterised in that the second filter medium (13) has a more than 5 % open area, preferably more than 20 %.

14. Coffee machine according to one of claims 1 to 13, characterised in that the first filter medium (12) has apertures with an inside diameter of approximately 100 to approximately 400 µm, preferably approximately 150 to approximately 200 µm.

15. Coffee machine according to one of claims 1 to 14, characterised in that the second filter medium (13) has apertures with an inside diameter of less than 120 µm, preferably approximately 50 to approximately 80 µm.

## Revendications

1. Machine à café (1) comportant une chambre de percolation (11) pour préparer de manière sélective une première sorte de café, en particulier du café express, et une seconde sorte de café, en particulier du café normal, **caractérisée** en ce que la chambre de percolation (11) est pourvue d'un premier moyen filtrant (12) pour la première sorte de café, en particulier du café express, et d'un deuxième moyen filtrant (13) pour la seconde sorte de café, en particulier du café normal, et qu'il est prévu un dispositif de distribution (7) pour évacuer la boisson préparée de la chambre de percolation (11), de manière sélective via le premier moyen filtrant (12) lorsque la première sorte de café a été sélectionnée, ou via le deuxième moyen filtrant (13) lorsque la seconde sorte de café a été sélectionnée.

2. Machine à café selon la revendication 1, **caractérisée** en ce que le dispositif de distribution (7) présente une première entrée d'eau de percolation (19a) débouchant dans la chambre de percolation (11) sur le premier moyen filtrant (12) et une seconde entrée d'eau de percolation (20a) débouchant dans la chambre de percolation (11) sur le deuxième moyen filtrant (13), dans laquelle, lors de la préparation de la première sorte de café par l'intermédiaire du premier moyen filtrant (12), l'eau de percolation est amenée dans la chambre de percolation (11) via le deuxième moyen filtrant (13) servant de filtre de distribution, et, lors de la préparation de la seconde sorte de café par l'intermédiaire du deuxième moyen filtrant (13), l'eau de percolation est amenée via le premier moyen filtrant (12) servant de filtre de distribution.

3. Machine à café selon la revendication 1 ou 2, **caractérisée** en ce que le dispositif de distribution (7) présente une première sortie de boisson (19a), sortant de la chambre de percolation (11), associée au premier moyen filtrant (12) et une seconde sortie de boisson (20a), sortant de la chambre de percolation (11), associée au deuxième moyen filtrant (13).

4. Machine à café selon la revendication 3, **caractérisée** en ce que l'entrée d'eau de percolation et la sortie de boisson, qui sont associées au même moyen filtrant (12 ou 13), sont formées par une conduite (19a ou 20a) commune.

5. Machine à café selon la revendication 4, **caractérisée** en ce que la conduite (19a ou 20a) commune peut être reliée par l'intermédiaire d'une vanne à trois voies (21 ou 22) à l'alimentation en eau de percolation (6) ou à un orifice distributeur (3).

6. Machine à café selon une des revendications 1 à 5, **caractérisée** en ce qu'une soupape de décharge de pression (26) est montée entre la chambre de percolation (11) et un orifice distributeur (3).

7. Machine à café selon une des revendications 1 à 6, **caractérisée** en ce que le volume de la chambre de percolation (11) peut être réglé en fonction du type de boisson et/ou de la quantité de boisson à préparer.

8. Machine à café selon une des revendications 1 à 7, **caractérisée** en ce que les deux moyens filtrants (12, 13) sont disposés en vis-à-vis, sensiblement parallèlement l'un à l'autre.

9. Machine à café selon une des revendications 1 à 8, **caractérisée** en ce que la chambre de percolation (11) est prévue dans un cylindre de percolation (8) d'un dispositif de percolation à piston (5), chacun de ces moyens filtrants (12, 13) étant respectivement disposé sur la face frontale d'un piston (9, 10).

10. Machine à café selon la revendication 9, **caractérisée** en ce que dans le cas d'un dispositif de percolation à piston (5) disposé verticalement, le premier moyen filtrant (12) pour la première sorte de café est disposé sur le piston supérieur (9).

11. Machine à café selon une des revendications 1 à 10, **caractérisée** en ce que le premier moyen filtrant (12) pour la première sorte de café présente une surface de filtre ouverte plus petite que le deuxième moyen filtrant (13) pour la seconde sorte de café.

12. Machine à café selon une des revendications 1 à 11, **caractérisée** en ce que le premier moyen filtrant (12) présente une surface ouverte d'environ 1 à environ 10%, de préférence d'environ 2 à environ 4%.

13. Machine à café selon une des revendications 1 à 12, **caractérisée** en ce que le deuxième moyen filtrant (13) présente une surface ouverte de plus de 5%, de préférence de plus de 20%.

14. Machine à café selon une des revendications 1 à 13, **caractérisée** en ce que le premier moyen filtrant (12) présente des trous d'un diamètre intérieur d'environ 100 à environ 400 µm, de préférence d'environ 150 à environ 200 µm.

15. Machine à café selon une des revendications 1 à 14, **caractérisée** en ce que le deuxième moyen filtrant (13) présente des trous d'un diamètre intérieur de moins de 120 µm, de préférence d'environ 50 à environ 80 µm.
